(19) Europäisches Patentamt
European Patent Office
Office européen des brevets

(11) **EP 3 950 762 A1**

(12) **EUROPEAN PATENT APPLICATION**
published in accordance with Art. 153(4) EPC

(43) Date of publication:
**09.02.2022 Bulletin 2022/06**

(21) Application number: **20776894.6**

(22) Date of filing: **17.03.2020**

(51) International Patent Classification (IPC):
**C08G 59/40** (2006.01)    **C09J 11/06** (2006.01)
**C09J 163/00** (2006.01)    **C09J 7/35** (2018.01)

(52) Cooperative Patent Classification (CPC):
**C08G 59/40; C09J 7/35; C09J 11/06; C09J 163/00**

(86) International application number:
**PCT/JP2020/011845**

(87) International publication number:
**WO 2020/196118 (01.10.2020 Gazette 2020/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.03.2019 JP 2019065066**

(71) Applicant: **NITTO DENKO CORPORATION**
**Ibaraki-shi**
**Osaka 567-8680 (JP)**

(72) Inventors:
• **NITTA Ayumi**
  **Ibaraki-shi, Osaka 567-8680 (JP)**
• **TANAKA Akiko**
  **Ibaraki-shi, Osaka 567-8680 (JP)**
• **YASUI Atsushi**
  **Ibaraki-shi, Osaka 567-8680 (JP)**

(74) Representative: **Müller-Boré & Partner**
**Patentanwälte PartG mbB**
**Friedenheimer Brücke 21**
**80639 München (DE)**

(54) **RESIN COMPOSITION AND METHOD FOR PRODUCING ADHESIVE STRUCTURE**

(57)    The invention relates to a resin composition containing an epoxy resin and a latent curing agent in which the epoxy resin contains an aliphatic epoxy resin containing a hydroxyl group and having a water dissolution rate of 65% or more and in which the latent curing agent has a reaction initiation temperature of 45°C or higher and 120°C or lower.

*FIG. 1*

**Description**

TECHNICAL FIELD

The present invention relates to a resin composition and a method for producing a bonded structure.

BACKGROUND ART

In the electronics industry, to mechanically adhere many components in an electronic device, semi-structural adhesives have been used.

When components in an electronic device are adhered using a semi-structural adhesive, there has been a problem because the high curing activation temperature damages the delicate parts in the electronic device.

To solve the problem, adhesives and adhesive tapes which can be cured at a relatively low temperature have been examined. For example, in PTL 1, by adding a latent curing agent which is activated at a low temperature to a curing agent layer which an epoxy tape has, curing at a low temperature is enabled.

CITATION LIST

PATENT LITERATURE

PTL 1: JP-T-2013-538271 (The term "JP-T" as used herein means a published Japanese translation of a PCT patent application.)

SUMMARY OF INVENTION

TECHNICAL PROBLEM

Although the epoxy tape described in the patent literature can be cured at a low temperature, the storage stability of the curing composition used for the curing agent layer is not sufficient. Therefore, when the composition is stored for a long time after the preparation, the fluidity of the composition is lost, and there is a problem for use.

A problem of the invention is to provide a resin composition which has high storage stability and high adhesion force and which can be cured at a low temperature and a method for producing a bonded structure using the composition.

SOLUTION TO PROBLEM

The present inventors have conducted extensive investigation to solve the problem. As a result, the inventors have found that a resin composition which has high storage stability and high adhesion force and which can be cured at a low temperature can be provided using a latent curing agent having a specific reaction initiation temperature as a curing agent and using a specific epoxy resin, and the invention has been thus completed.

In an embodiment, the invention relates to a resin composition containing an epoxy resin and a latent curing agent in which the epoxy resin contains an aliphatic epoxy resin containing a hydroxyl group and having a water dissolution rate of 65% or more and in which the latent curing agent has a reaction initiation temperature of 45°C or higher and 120°C or lower.

In an embodiment of the invention, the epoxy resin preferably contains the aliphatic epoxy resin in an amount of 5 to 90 mass%.

In an embodiment of the invention, the latent curing agent contained in the resin composition is preferably an amine-based compound.

In an embodiment of the invention, the resin composition preferably contains 15 to 40 parts by mass of the latent curing agent based on 100 parts by mass of the epoxy resin.

In an embodiment of the invention, the shear strength of the resin composition at peeling off is preferably 10 MPa or more when the shear strength is measured by adhering two pieces of SPCC defined by JIS G3141 by applying the resin composition on a surface of a piece of SPCC, placing the other piece of SPCC on the applied surface and heating at 80°C for 30 minutes and then pulling in the length direction of the SPCC at 5 mm/minute.

In an embodiment, the invention relates to a method for producing a bonded structure including a step (1) of providing a resin composition layer formed from the resin composition on a first adherend, a step (2) of bringing a second adherend into contact with the side of the first adherend on which the resin composition layer has been provided and a step (3) of thermally curing the resin composition layer at 70°C or higher and 150°C or lower.

In the method for producing a bonded structure in an embodiment of the invention, the resin composition layer is preferably cured under any of the heating conditions in (1) to (5) below,

(1) heating at a temperature of 70°C or higher and lower than 80°C for 30 to 120 minutes,
(2) heating at a temperature of 80°C or higher and lower than 90°C for 20 to 100 minutes,
(3) heating at a temperature of 90°C or higher and lower than 100°C for 10 to 60 minutes,
(4) heating at a temperature of 100°C or higher and lower than 120°C for 10 to 40 minutes, and
(5) heating at a temperature of 120°C or higher and lower than 150°C for 5 to 30 minutes.

ADVANTAGEOUS EFFECTS OF INVENTION

According to the invention, a resin composition which has high storage stability and high adhesion force and which can be cured at a low temperature can be provided. Even after storing the composition for a long time, a bonded structure in which adherends are adhered strongly can be produced.

BRIEF DESCRIPTION OF DRAWINGS

[Fig. 1] Fig. 1 is a figure illustrating the state in which a resin composition layer 1 has been provided on a first adherend 2 in the method for producing a bonded structure according to an embodiment of the invention.
[Fig. 2] Fig. 2 is a figure illustrating a bonded structure 10 obtained by providing a resin composition layer 1 on a first adherend 2, further providing a second adherend 3 thereon and then thermally curing the resin composition layer 1 in the method for producing a bonded structure according to an embodiment of the invention.

DESCRIPTION OF EMBODIMENTS

Embodiments of the invention are explained in detail below. In this regard, the invention is not limited to the embodiments explained below.
In the present specification, "A to B" indicating a range means "A or more and B or less". Moreover, in the present specification, "mass%" and "weight%" are considered synonyms, and "parts by mass" and "parts by weight" are considered synonyms.
In the present specification, "epoxy resin" is a general term for the "aliphatic epoxy resins" in the invention and "epoxy resins other than the aliphatic epoxy resins".

[Resin Composition]

The resin composition according to an embodiment of the invention contains an epoxy resin and a latent curing agent and is characterized in that the epoxy resin contains an aliphatic epoxy resin containing a hydroxyl group and having a water dissolution rate of 65% or more and that the latent curing agent has a reaction initiation temperature of 45°C or higher and 120°C or lower.
Because a latent curing agent having a reaction initiation temperature of 45°C or higher and 120°C or lower is used as a curing agent, the resin composition can be cured at a low temperature. Because the resin composition contains an aliphatic epoxy resin containing a hydroxyl group and having a water dissolution rate of 65% or more, the resin composition has high storage stability and can achieve high adhesion force after curing. That is, the resin composition in the embodiment is useful, for example, as an adhesive composition for adhering adherends.
The components that the resin composition contains are explained in detail below.

<Epoxy Resin>

The resin composition according to an embodiment of the invention contains an epoxy resin.
It is important that the epoxy resin in embodiments of the invention contains an aliphatic epoxy resin containing a hydroxyl group and having a water dissolution rate of 65% or more. As a result, the resin composition can maintain the fluidity for a long time, and the storage stability can be improved. This is speculated to be because the compatibility with the curing agent decreases because the aliphatic epoxy resin contains a hydroxyl group. Moreover, this is speculated to be because, as the water dissolution rate of the aliphatic epoxy resin is 65% or more, the compatibility with the curing agent further decreases due to an increase in the amount of hydroxyl groups and because the reaction does not start without heating. The adhesion force after curing can be improved due to the flexible skeleton of the aliphatic epoxy resin. The present disclosure, however, is not limited to the mechanisms.

The aliphatic epoxy resin containing a hydroxyl group has at least one hydroxyl group in one molecule. The kind thereof is not particularly restricted, and examples thereof include glycerol diglycidyl ether, glycerol triglycidyl ether, glycerin polyglycidyl ether, polyglycerin polyglycidyl ether, sorbitol polyglycidyl ether, cyclohexanedimethanol diglycidyl ether and the like.

As the aliphatic epoxy resin having a water dissolution rate of 65% or more in embodiments of the invention, an aliphatic epoxy resin having "a water dissolution rate of 65% or more" can be selected from the aliphatic epoxy resins containing a hydroxyl group above and used.

The water dissolution rate of an epoxy resin is the dissolution rate of 10 parts by mass of a compound having one or more epoxy groups dissolved in 90 parts by mass of water at normal temperature and is represented by the following equation.

$$\text{Water Dissolution Rate (\%)} = (1\text{-Insoluble Epoxy Amount/Total Epoxy Weight}) \times 100$$

The water dissolution rate of the aliphatic epoxy resin is 65% or more, preferably 70% or more, more preferably 80% or more.

The amount of the aliphatic epoxy resin containing a hydroxyl group and having a water dissolution rate of 65% or more is preferably 5 to 90 mass% based on the total amount of the epoxy resin. The amount is more preferably 10 mass% or more, further preferably 15 mass% or more. The amount is preferably 80 mass% or less, more preferably 70 mass% or less. When the aliphatic epoxy resin content is in the range, higher storage stability and high adhesion force after curing can be obtained.

The epoxy resin in embodiments of the invention can contain an epoxy resin other than the aliphatic epoxy resin. That is, examples thereof include an aliphatic epoxy resin which does not contain any hydroxyl group, an alicyclic epoxy resin, an aromatic epoxy resin and the like.

The aliphatic epoxy resin which does not contain any hydroxyl group is not particularly limited, but examples thereof include neopentyl glycol diglycidyl ether, 1,4-cyclohexanediglycidyl ether, 1,3-cyclohexanediglycidyl ether, 1,2-cyclohexanediglycidyl ether, hexahydrophthalic acid diglycidyl ester, hexahydroterephthalic acid diglycidyl ester, 1,4-butanediol diglycidyl ether, 1,6-hexanediol diglycidyl ether and the like. A kind thereof may be used alone, or two or more kinds thereof may be used in combination.

The alicyclic epoxy resin is not particularly limited, but examples thereof include glycidyl ether of an alicyclic alcohol (in particular, an alicyclic polyhydric alcohol). More specific examples thereof include a hydrogenated bisphenol A-type epoxy compound, a hydrogenated bisphenol F-type epoxy compound, a hydrogenated biphenol-type epoxy compound, a hydrogenated phenol novolak-type epoxy compound, a hydrogenated cresol novolak-type epoxy compound and the like. A kind thereof may be used alone, or two or more kinds thereof may be used in combination.

The aromatic epoxy resin is not particularly limited, but examples thereof include a bisphenol A-type epoxy compound, a bisphenol F-type epoxy compound, a biphenol-type epoxy compound, a phenol novolak-type epoxy compound, a cresol novolak-type epoxy compound and the like. A kind thereof may be used alone, or two or more kinds thereof may be used in combination.

In view of the curing property, a bisphenol-based epoxy compound is preferable, and a bisphenol A-type epoxy compound and a bisphenol F-type epoxy compound are more preferable.

The epoxy resin in embodiments of the invention may be in any of liquid, semisolid and solid forms at normal temperature.

The percentage of the epoxy resin blended is, for example, 40 mass% or more based on the total amount of the resin composition, preferably 50 mass% or more. The percentage is, for example, 100 mass% or less, preferably 70 mass% or less. When the percentage of the epoxy resin blended is in the range, simpler and stronger adhesion is possible.

The resin composition according to an embodiment of the invention can also contain a resin other than the epoxy resin. Examples thereof include a silicone compound, a polyol compound such as polypropylene glycol, a urethane resin, an acrylic resin and the like.

<Latent Curing Agent>

The resin composition according to an embodiment of the invention contains a latent curing agent.

The latent curing agent refers to a curing agent which is solid at normal temperature (specifically at 25°C) and which is activated at a certain temperature, mixes with the epoxy resin and cures the epoxy resin. In particular, in embodiments of the invention, the latent curing agent is characterized by starting the activity in a temperature range of 45°C or higher and 120°C or lower. That is, the latent curing agent has a reaction initiation temperature of 45°C or higher and 120°C or lower. When the reaction initiation temperature of the latent curing agent is in the range, curing can be prevented from starting during the preparation or the storage of the resin composition, and the reaction can be advanced at a relatively low temperature for curing.

The latent curing agent in embodiments of the invention has a reaction initiation temperature of 120°C or lower, and a latent curing agent having a reaction initiation temperature of 100°C or lower is more preferable. A latent curing agent having a reaction initiation temperature of 45°C or higher and a latent curing agent having a reaction initiation temperature of 50°C or higher are preferable.

The reaction initiation temperature of the latent curing agent in embodiments of the invention can be measured, for example, by the following method.

About 5 mg of a resin composition obtained by mixing 20 parts by mass of a latent curing agent in 100 parts by mass of a bisphenol F-type epoxy (jER806, manufactured by Mitsubishi Chemical Corporation) is weighed in an aluminum closed cell. Next, the heat flow behavior of the resin composition is obtained using a temperature-modulated DSC (product name "Q-2000", manufactured by TA Instruments Inc.) in a nitrogen atmosphere of 50 mL/min at a heating rate of 2°C/min. The exothermic initiation temperature, which is the temperature at which the heat flow behavior starts, is regarded as the reaction initiation temperature of the latent curing agent.

The kind of the latent curing agent in embodiments of the invention is not particularly restricted as long as the activation temperature conditions are satisfied. Examples thereof include an amine-based compound, a urea-based compound, an amide-based compound, a dihydrazide-based compound, an imidazole-based compound, an imidazoline-based compound and the like.

Examples of the amine-based compound include ethylenediamine, propylenediamine, diethylenetriamine, triethylenetetramine, amine adducts thereof, metaphenylenediamine, diaminodiphenylmethane, diaminodiphenylsulfone and the like.

Examples of the urea-based compound include 3-(3,4-dichlorophenyl)-1,1-dimethylurea (DCMU), N'-phenyl-N,N-dimethylurea, 1,1'-(methyl-m-phenylene)bis(3,3'-dimethylurea) and the like.

Of such urea-based compounds, 3-(3,4-dichlorophenyl)-1,1-dimethylurea (DCMU) is preferable.

Examples of the amide-based compound include polyamide and the like.

Examples of the hydrazide-based compound include dihydrazides such as adipic acid dihydrazide and the like.

Examples of the imidazole-based compound include methylimidazole, 2-ethyl-4-methylimidazole, ethylimidazole, isopropylimidazole, 2,4-dimethylimidazole, phenylimidazole, undecylimidazole, heptadecylimidazole, 2-phenyl-4-methylimidazole and the like.

Examples of the imidazoline-based compound include methylimidazoline, 2-ethyl-4-methylimidazoline, ethylimidazoline, isopropylimidazoline, 2,4-dimethylimidazoline, phenylimidazoline, undecylimidazoline, heptadecylimidazoline, 2-phenyl-4-methylimidazoline and the like.

A kind of such latent curing agents may be used alone, or a combination thereof can also be used.

Of such latent curing agents, an amine-based compound is preferable.

The percentage of such a latent curing agent blended is, for example, 15 to 40 parts by mass based on 100 parts by mass of the epoxy resin, preferably 20 to 35 parts by mass, more preferably 20 to 30 parts by mass. In the range, curing can be prevented from starting during the storage, and the reaction can be advanced at a relatively low temperature for curing.

<Other Components>

To the resin composition according to an embodiment of the invention, a filler such as silica, mica and calcium carbonate can also be blended for the purpose of adjusting the elastic modulus of the cured layer or for another purpose. The amount of the filler blended is not particularly limited but is, for example, 1 part by mass or more, for example, based on 100 parts by mass of the resin composition, preferably 10 parts by mass or more. The amount is, for example, 100 parts by mass or less, preferably 80 parts by mass or less.

The shear strength described below of the resin composition according to an embodiment of the invention is preferably 10 MPa or more. That is, when two pieces of SPCC defined by JIS G3141 are adhered by applying the resin composition on a surface of a piece of SPCC, placing the other piece of SPCC on the applied surface and heating at 80°C for 30 minutes and then pulled in the length direction of the SPCC at 5 mm/minute, the shear strength at peeling off is preferably 10 MPa or more. The shear strength is more preferably 12 MPa or more, further preferably 15 MPa or more.

[Production Method of Bonded Structure]

The method for producing a bonded structure according to an embodiment of the invention includes a step (1) of providing a resin composition layer formed from the resin composition according to embodiments of the invention on a first adherend, a step (2) of bringing a second adherend into contact with the side of the first adherend on which the resin composition layer has been provided and a step (3) of thermally curing the resin composition layer at 70°C or higher and 150°C or lower.

Each step is explained below.

<Step (1) of providing a resin composition layer formed from the resin composition according to embodiments of the invention on a first adherend>

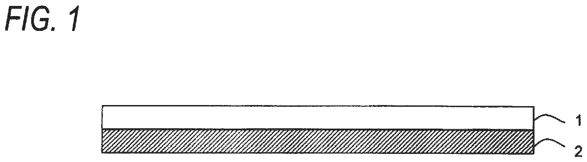

To provide a resin composition layer 1 formed from the resin composition on a first adherend 2 as illustrated in Fig. 1, for example, a coating film may be formed by applying the resin composition 1 on the first adherend 2.

Here, the thickness of the coating film formed from the resin composition (the undried resin composition layer) is, for example, 50 μm or more, preferably 100 μm or more, more preferably 200 μm or more. The thickness is, for example, 2000 μm or less, preferably 1000 μm or less, more preferably 700 μm or less. In particular, to achieve both excellent curing property and high adhesiveness after curing, the thickness of the coating film is preferably 100 to 700 μm.

The first adherend 2 is not particularly restricted, and examples thereof include a metal, glass, plastic, slate, mortar, concrete, rubber, wood, leather, cloth, paper and the like. The first adherend 2 is preferably slate, mortar or concrete.

In the above manner, the resin composition layer 1 is provided on the first adherend 2 as illustrated in Fig. 1.

<Step (2) of bringing a second adherend into contact with the side of the first adherend on which the resin composition layer has been provided>

In this step, a second adherend is brought into contact with the resin composition layer provided on the first adherend in the step (1) from the side on which the resin composition layer has been provided. The method for bringing the second adherend into contact with the side of the first adherend on which the resin composition layer has been provided is not particularly restricted, and any method can be used.

The reaction temperature before and after bringing a second adherend 3 into contact with the side of the first adherend 2 on which the resin composition layer 1 has been provided is, for example, normal temperature.

The second adherend 3 is not particularly restricted, but examples thereof include those similar to the adherends listed as examples of the first adherend 2.

<Step (3) of thermally curing the resin composition layer at 70°C or higher and 150°C or lower>

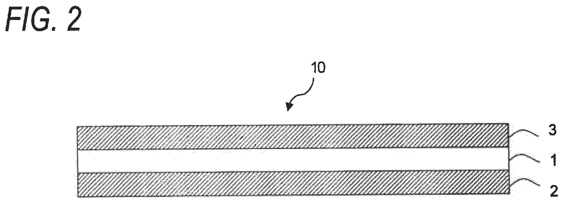

In this step, after providing the first adherend 2 and the second adherend 3 through the resin composition layer 1 in the step (2), by thermally curing the resin composition layer 1, the first adherend 2 and the second adherend 3 are strongly adhered, and a bonded structure 10 illustrated in Fig. 2 is thus obtained.

Because the resin composition in embodiments of the invention contains a latent curing agent having a reaction initiation temperature of 45°C or higher and 120°C or lower, the resin composition layer formed from the composition can be cured at a relatively low temperature.

The temperature for thermally curing the resin composition layer is 70°C or higher and 150°C or lower. The temperature is preferably 75°C or higher, more preferably 80°C or higher. The temperature is preferably 120°C or lower, more preferably 100°C or lower.

The reaction period differs with the temperature but is, for example, 5 to 120 minutes, preferably 10 to 60 minutes, more preferably 20 to 40 minutes.

Specifically, curing under any of the heating conditions in (1) to (5) below is preferable.

(1) Heating at a temperature of 70°C or higher and lower than 80°C for 30 to 120 minutes. More preferably, heating for 40 to 100 minutes.
(2) Heating at a temperature of 80°C or higher and lower than 90°C for 20 to 100 minutes. More preferably, heating for 25 to 90 minutes.
(3) Heating at a temperature of 90°C or higher and lower than 100°C for 10 to 60 minutes. More preferably, heating for 15 to 45 minutes.
(4) Heating at a temperature of 100°C or higher and lower than 120°C for 10 to 40 minutes. More preferably, heating for 15 to 30 minutes.
(5) Heating at a temperature of 120°C or higher and lower than 150°C for 5 to 30 minutes. More preferably, heating for 10 to 20 minutes.

In the bonded structure produced in the above manner, the shear strength of the resin composition layer 1 is preferably 10 MPa or more, more preferably 12 MPa or more, further preferably 15 MPa or more. The shear strength of the resin composition layer 1 is preferably 10 MPa or more because the resin composition layer 1 has excellent adhesiveness and because the first adherend 2 and the second adherend 3 can be easily adhered certainly.

The shear strength of the resin composition layer 1 is measured by the following method.

The resin composition is applied to an end of SPCC (JIS G3141) of width 25 mm × length 100 mm × thickness 1.6 mm. The area of application is width 25 mm × length 10 mm, and the thickness is secured by placing a spacer of 0.5 mm. After putting the other SPCC thereon and fixing with a clip, the resin composition is cured. The test piece thus obtained is pulled with a tension tester AG-X (manufactured by Shimadzu Corporation) in the length direction at 5 mm/min, and the test force at peeling off is measured. The shear strength is calculated by the following equation.

$$\text{Shear Strength (MPa)} = \text{Test Force (N)}/250 \text{ mm}^2$$

EXAMPLES

The embodiments of the invention are explained in more detail below using Examples.

(Water Dissolution Rate)

The water dissolution rates of the aliphatic epoxy resins used in the Examples and the Comparative Examples were calculated as follows.

After mixing water and an aliphatic epoxy resin at a weight ratio of 90/10 and leaving the mixture still overnight, the insoluble matters were taken out, and the weight was measured. The water dissolution rate was calculated by the following equation.

$$\text{Water Dissolution Rate (\%)} = (1 - \text{Insoluble Epoxy Amount}/\text{Total Epoxy Weight}) \times 100$$

(Storage Stability)

The evaluation of the storage stability of the resin compositions prepared in the Examples and the Comparative Examples was conducted by the following method. That is, the prepared resin compositions were stored at normal temperature for two weeks. Those which had fluidity were given a mark "A", and those which did not have fluidity were given a mark "B".

(Shear Strength)

The shear strengths of the resin compositions prepared in the Examples and the Comparative Examples were measured by the following method.

A resin composition was applied to an end of SPCC (JIS G3141) of width 25 mm × length 100 mm × thickness 1.6 mm. The area of application was width 25 mm × length 10 mm, and the thickness was secured by placing a spacer of 0.5 mm. After putting the other SPCC thereon and fixing with a clip, the resin composition was cured under the curing conditions shown in Table 1. The test piece thus obtained was pulled with a tension tester AG-X (manufactured by Shimadzu Corporation) in the length direction at 5 mm/min, and the test force at peeling off was measured. The shear strength was calculated by the following equation.

$$\text{Shear Strength (MPa)} = \text{Test Force (N)}/250 \text{ mm}^2$$

(Reaction Initiation Temperatures of Latent Curing Agents)

The reaction initiation temperatures of the latent curing agents used in the Examples and the Comparative Examples were measured by the following method.

About 5 mg of a resin composition obtained by mixing 20 parts by mass of a latent curing agent in 100 parts by mass of a bisphenol F-type epoxy (jER806, manufactured by Mitsubishi Chemical Corporation) was weighed in an aluminum closed cell. Next, the heat flow behavior of the resin composition was obtained using a temperature-modulated DSC (product name "Q-2000", manufactured by TA Instruments Inc.) in a nitrogen atmosphere of 50 mL/min at a heating rate of 2°C/min. The exothermic initiation temperature, which was the temperature at which the heat flow behavior started, was regarded as the reaction initiation temperature of the latent curing agent.

[Preparation of Resin Compositions]

(Example 1)

The resin composition of Example 1 was prepared by mixing 70 parts by mass of a bisphenol F-type epoxy resin (product name "jER806", manufactured by Mitsubishi Chemical Corporation), 30 parts by mass of glycerin polyglycidyl ether having a hydroxyl group and having a water dissolution rate of 70% (product name "SR-GLG", manufactured by Sakamoto Yakuhin Kogyo Co., Ltd.) as an aliphatic epoxy resin and 30 parts by mass of an amine compound (product name "Fujicure FXR-1020", manufactured by T&K TOKA Co., Ltd.) as a latent curing agent. As a result of measurement by the above method, the reaction initiation temperature of the latent curing agent was 54°C.

(Example 2)

The resin composition of Example 2 was prepared in the same manner as in the preparation of the resin composition of Example 1 except that polyglycerin polyglycidyl ether having a hydroxyl group and having a water dissolution rate of 97% (product name "SR-6GL", manufactured by Sakamoto Yakuhin Kogyo Co., Ltd.) was used as the aliphatic epoxy resin.

(Example 3)

The resin composition of Example 3 was prepared in the same manner as in the preparation of the resin composition of Example 1 except that sorbitol polyglycidyl ether having a hydroxyl group and having a water dissolution rate of 94% (product name "EX-614B", manufactured by Nagase ChemteX Corporation) was used as the aliphatic epoxy resin.

(Example 4)

The resin composition of Example 4 was prepared in the same manner as in the preparation of the resin composition of Example 1 except that the amount of the bisphenol F-type epoxy resin was 30 parts by mass and that polyglycerin polyglycidyl ether having a hydroxyl group and having a water dissolution rate of 99% (product name "SR-4GL", manufactured by Sakamoto Yakuhin Kogyo Co., Ltd.) in an amount of 70 parts by mass was used as the aliphatic epoxy resin.

(Example 5)

The resin composition of Example 5 was prepared in the same manner as in the preparation of the resin composition of Example 4 except that the amount of the bisphenol F-type epoxy resin was 50 parts by mass and that the amount of the aliphatic epoxy resin was 50 parts by mass.

(Example 6)

The resin composition of Example 6 was prepared in the same manner as in the preparation of the resin composition of Example 4 except that the amounts of the bisphenol F-type epoxy resin and the aliphatic epoxy resin were 70 parts by mass and 30 parts by mass, respectively, and that an amine compound (product name "Fujicure FXR-1081", manufactured by T&K TOKA Co., Ltd.) in an amount of 30 parts by mass was used as the latent curing agent. As a result of measurement by the above method, the reaction initiation temperature of the latent curing agent was 48°C.

(Example 7)

The resin composition of Example 7 was prepared in the same manner as in the preparation of the resin composition of Example 4 except that the amount of the bisphenol F-type epoxy resin was 90 parts by mass and that the amount of the aliphatic epoxy resin was 10 parts by mass.

(Example 8)

The resin composition of Example 8 was prepared in the same manner as in the preparation of the resin composition of Example 4 except that a bisphenol A-type epoxy resin (product name "jER828", manufactured by Mitsubishi Chemical Corporation) in an amount of 70 parts by mass was used instead of the bisphenol F-type epoxy resin and that the amount of the aliphatic epoxy resin was 30 parts by mass.

(Example 9)

The resin composition of Example 9 was prepared in the same manner as in the preparation of the resin composition of Example 4 except that the amounts of the bisphenol F-type epoxy resin and the aliphatic epoxy resin were 70 parts by mass and 30 parts by mass, respectively, and that an amine compound (product name "Fujicure FXR-1081", manufactured by T&K TOKA Co., Ltd.) in an amount of 20 parts by mass was used as the latent curing agent.

(Example 10)

The resin composition of Example 10 was prepared in the same manner as in the preparation of the resin composition of Example 9 except that an amine compound (product name "Fujicure FXR-1020", manufactured by T&K TOKA Co., Ltd.) in an amount of 35 parts by mass was used as the latent curing agent.

(Example 11)

The resin composition of Example 11 was prepared in the same manner as in the preparation of the resin composition of Example 9 except that the amount of the latent curing agent was 40 parts by mass.

(Comparative Example 1)

The resin composition of Comparative Example 1 was prepared by mixing 100 parts by mass of a bisphenol A-type epoxy resin (product name "jER828", manufactured by Mitsubishi Chemical Corporation) and 30 parts by mass of an amine compound (product name "Fujicure FXR-1020", manufactured by T&K TOKA Co., Ltd.) as a latent curing agent.

(Comparative Example 2)

The resin composition of Comparative Example 2 was prepared by mixing 70 parts by mass of a bisphenol F-type epoxy resin (product name "jER806", manufactured by Mitsubishi Chemical Corporation), 30 parts by mass of polyglycerin polyglycidyl ether having a hydroxyl group and having a water dissolution rate of 99% (product name "SR-4GL", manufactured by Sakamoto Yakuhin Kogyo Co., Ltd.) as an aliphatic epoxy resin and 7 parts by mass of dicyandiamide (DICY) as a curing agent. As a result of measurement by the above method, the reaction initiation temperature of the curing agent was 140°C or higher, and the curing agent is not the latent curing agent in the invention.

(Comparative Example 3)

The resin composition of Comparative Example 3 was prepared in the same manner as in the preparation of the resin composition of Comparative Example 2 except that trimethylolpropane polyglycidyl ether having no hydroxyl group and having a water dissolution rate of 35% (product name "SR-TMP", manufactured by Sakamoto Yakuhin Kogyo Co., Ltd.) in an amount of 30 parts by mass was used as the aliphatic epoxy resin and that an amine compound (product name "Fujicure FXR-1020", manufactured by T&K TOKA Co., Ltd.) in an amount of 30 parts by mass was used as the latent curing agent.

(Comparative Example 4)

The resin composition of Comparative Example 4 was prepared in the same manner as in the preparation of the resin composition of Comparative Example 3 except that diethylene glycol diglycidyl ether having no hydroxyl group and having a water dissolution rate of 100% (product name "EX-850", manufactured by Nagase ChemteX Corporation) in an amount of 30 parts by mass was used as the aliphatic epoxy resin.

[Table 1]

Table 1

| | Epoxy Resin | | | | | | Curing Agent | | Curing Condition | Shear Strength (MPa) | Storage Stability |
| | Epoxy Resin | | Aliphatic Epoxy Resin | | | | | | | | |
| | Kind | Added Amount (Parts by Mass) | Kind | OH | Water Dissolution Rate (%) | Added Amount (Parts Mass) | Kind by | Added Amount (Parts by Mass) | | | |
| Example 1 | jER806 | 70 | SR-GLG | Contained | 70 | 30 | FXR1020 | 30 | 80°C 30 min | 18.3 | A |
| Example 2 | jER806 | 70 | SR-6GL | Contained | 97 | 30 | FXR1020 | 30 | 80°C 30 min | 14.7 | A |
| Example 3 | jER806 | 70 | EX-614B | Contained | 94 | 30 | FXR1020 | 30 | 80°C 30 min | 16.7 | A |
| Example 4 | jER806 | 30 | SR-4GL | Contained | 99 | 70 | FXR1020 | 30 | 80°C 30 min | 13.6 | A |
| Example 5 | jER806 | 50 | SR-4GL | Contained | 99 | 50 | FXR1020 | 30 | 80°C 30 min | 18.4 | A |
| Example 6 | jER806 | 70 | SR-4GL | Contained | 99 | 30 | FXR1081 | 30 | 80°C 30 min | 15.2 | A |
| Example 7 | jER806 | 90 | SR-4GL | Contained | 99 | 10 | FXR1020 | 30 | 80°C 30 min | 14 | A |
| Example 8 | jER828 | 70 | SR-4GL | Contained | 99 | 30 | FXR1020 | 30 | 80°C 30 min | 15.9 | A |
| Example 9 | jER806 | 70 | SR-4GL | Contained | 99 | 30 | FXR1081 | 20 | 145°C 30 min | 10.2 | A |
| Example 10 | jER806 | 70 | SR-4GL | Contained | 99 | 30 | FXR1020 | 35 | 100°C 15 min | 16.2 | A |
| Example 11 | jER806 | 70 | SR-4GL | Contained | 99 | 30 | FXR1081 | 40 | 70°C 45 min | 13.9 | A |
| Comparative Example 1 | jER828 | 100 | None | - | - | - | FXR1020 | 30 | 80°C 30 min | 9.5 | A |

| | Epoxy Resin | | | | | | Curing Agent | | Curing Condition | Shear Strength (MPa) | Storage Stability |
|---|---|---|---|---|---|---|---|---|---|---|---|
| | Epoxy Resin | | Aliphatic Epoxy Resin | | | | | | | | |
| | Kind | Added Amount (Parts by Mass) | Kind | OH | Water Dissolution Rate (%) | Added Amount (Parts Mass) | Kind by | Added Amount (Parts by Mass) | | | |
| Comparative Example 2 | jER806 | 70 | SR-4GL | Contained | 99 | 30 | DICY | 7 | 80°C 30 min | Uncured | A |
| Comparative Example 3 | jER806 | 70 | SR-TMP | Not Contained | 35 | 30 | FXR1020 | 30 | 80°C 30 min | 15.4 | B |
| Comparative Example 4 | jER806 | 70 | EX-850 | Not Contained | 100 | 30 | FXR1020 | 30 | 80°C 30 min | 14.3 | B |

It was confirmed that the resin compositions of Examples 1 to 11 had high storage stability, could be cured at a low temperature of 70 to 145°C and had high adhesion force.

On the other hand, because the resin composition of Comparative Example 1 did not contain any aliphatic epoxy resin, the shear strength after curing was low. Moreover, the resin composition of Comparative Example 2 did not contain any latent curing agent having a reaction initiation temperature of 45°C or higher and 120°C or lower and thus could not be cured under the curing condition of 80°C for 30 minutes. Because the aliphatic epoxy resins of the resin compositions of Comparative Examples 3 and 4 did not contain any hydroxyl group, the storage stability was low.

The present application is based on a Japanese patent application filed on March 28, 2019 (patent application No. 2019-065066), and the contents thereof are incorporated in the present application by reference.

REFERENCE SIGNS LIST

1. Resin composition layer
2. First adherend
3. Second adherend
10. Bonded structure

**Claims**

1. A resin composition containing an epoxy resin and a latent curing agent,

   wherein the epoxy resin contains an aliphatic epoxy resin which contains a hydroxyl group and which has a water dissolution rate of 65% or more, and
   the latent curing agent has a reaction initiation temperature of 45°C or higher and 120°C or lower.

2. The resin composition according to claim 1, wherein the epoxy resin contains the aliphatic epoxy resin in an amount of 5 to 90 mass%.

3. The resin composition according to claim 1 or 2, wherein the latent curing agent is an amine-based compound.

4. The resin composition according to any one of claims 1 to 3 which contains 15 to 40 parts by mass of the latent curing agent based on 100 parts by mass of the epoxy resin.

5. The resin composition according to any one of claims 1 to 4, wherein the shear strength at peeling off is 10 MPa or more, wherein the shear strength is measured by adhering two pieces of SPCC defined by JIS G3141 by applying the resin composition on a surface of a piece of SPCC, placing the other piece of SPCC on the applied surface and heating at 80°C for 30 minutes and then pulling in the length direction of the SPCC at 5 mm/minute.

6. A method for producing a bonded structure including,

   a step (1) of providing a resin composition layer formed from the resin composition according to any one of claims 1 to 5 on a first adherend,
   a step (2) of bringing a second adherend into contact with the side of the first adherend on which the resin composition layer has been provided, and
   a step (3) of thermally curing the resin composition layer at 70°C or higher and 150°C or lower.

7. The method for producing a bonded structure according to claim 6, wherein the resin composition layer is cured under any of the heating conditions in (1) to (5) below,

   (1) heating at a temperature of 70°C or higher and lower than 80°C for 30 to 120 minutes,
   (2) heating at a temperature of 80°C or higher and lower than 90°C for 20 to 100 minutes,
   (3) heating at a temperature of 90°C or higher and lower than 100°C for 10 to 60 minutes,
   (4) heating at a temperature of 100°C or higher and lower than 120°C for 10 to 40 minutes, and
   (5) heating at a temperature of 120°C or higher and lower than 150°C for 5 to 30 minutes.

FIG. 1

*FIG. 2*

## INTERNATIONAL SEARCH REPORT

| | International application No. |
|---|---|
| | PCT/JP2020/011845 |

**A. CLASSIFICATION OF SUBJECT MATTER**
Int.Cl. C08G59/40(2006.01)i, C09J11/06(2006.01)i, C09J163/00(2006.01)i, C09J7/35(2018.01)i
FI: C08G59/40, C09J7/35, C09J163/00, C09J11/06
According to International Patent Classification (IPC) or to both national classification and IPC

**B. FIELDS SEARCHED**

Minimum documentation searched (classification system followed by classification symbols)
Int.Cl. C08G59/40, C09J11/06, C09J163/00, C09J7/35

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2011-195767 A (ASAHI KASEI E MATERIALS CORPORATION) 06.10.2011 (2011-10-06), claims 1-5, 12-14, paragraphs [0002], [0009], [0010], [0018], [0026], [0029], [0043]-[0077], examples 1-4, 9.5 | 1-7 |
| X | JP 2003-045831 A (TORAY INDUSTRIES, INC.) 14.02.2003 (2003-02-14), paragraph [0038] | 1-2 |
| A | | 3-7 |
| A | JP 10-338553 A (OWENS CORNING) 22.12.1998 (1998-12-22), paragraph [0027], example 3 | 1-7 |
| A | JP 2018-104683 A (KYOCERA CORPORATION) 05.07.2018 (2018-07-05), paragraph [0089] | 1-7 |
| A | JP 2011-026443 A (SONY CHEMICAL & INFORMATION DEVICE CORP.) 10.02.2011 (2011-02-10), paragraphs [0074]-[0080], [0090], [0095] | 1-7 |

| ☐ Further documents are listed in the continuation of Box C. | ☒ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 29.05.2020 | 09.06.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

<table>
<tr><td colspan="2"><strong>INTERNATIONAL SEARCH REPORT</strong><br>Information on patent family members</td><td>International application No.<br><em>PCT/JP2020/011845</em></td></tr>
</table>

| | | |
|---|---|---|
| JP 2011-195767 A | 06.10.2011 | (Family: none) |
| JP 2003-045831 A | 14.02.2003 | (Family: none) |
| JP 10-338553 A | 22.12.1998 | EP 879803 A1<br>example 3 |
| JP 2018-104683 A | 05.07.2018 | CN 110603294 A<br>paragraph [0325] |
| JP 2011-026443 A | 10.02.2011 | US 2011/0196110 A1<br>paragraphs [0082]-[0103], examples 5, 6<br>KR 10-2011-0117181 A<br>CN 102471462 A |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013538271 T
- JP 2019065066 A